# EUROPEAN PATENT APPLICATION

(11) **EP 1 278 376 A2**
(43) Date of publication of application: **22.01.2003**
(21) Application number: 02253933.2
(22) Date of filing: 06.06.2002
(51) Int. Cl.: H04N 5/46

(54) **Image signal processing apparatus**

(30) Priority: 27.06.2001 JP 2001195151
(71) Applicant: Pioneer Corporation, Tokyo-to (JP); Shizuoka Pioneer Corporation, Fukuroi-shi, Shizuoka-ken (JP)
(72) Inventor: Usui, Junichi, Washizu, Fukuroi-shi, Shizuoka-ken (JP)
(74) Representative: Haley, Stephen

(57) **Abstract**

An image signal processing apparatus comprises a plurality of signal processing circuits (2, 3, 5) for carrying out an image signal processing in accordance with image setting parameters. A storage device (7) rewritably stores the image setting parameters relative to the plurality of signal processing circuits (2, 3, 5). A control device (6) controls image adjustment through the plurality of signal processing circuits (2, 3, 5), utilizing the image setting parameters stored in the storage device (7).

## Description

The present invention relates an image signal processing apparatus, which permits to execute image signal processing in accordance with image setting parameters, and especially to the image signal processing apparatus, in which image setting parameters can easily be changed.

A display device, which uses a plasma display panel, utilizes a plurality of ICs (integrated circuits) for various image processing. These ICs execute the image processing in accordance with predetermined parameters (for example, parameters for setting output levels of luminance signal and color-difference signal). For example in a display device that is adaptable to a plurality of signal formats (e.g., NTSC, PAL and HDTV), parameters corresponding to the respective signal formats are provided so that parameters are selected in correspondence to image signal as inputted to carry out the appropriate image processing. A microcomputer included in the display device controls the plurality of ICs for the image processing. The parameters corresponding to the plurality of signal formats are included in a program, which specifies procedure of the microcomputer. Prescribed parameters are selected from the parameters written on the program to execute the appropriate image processing in accordance with the signal format.

In the conventional display device, the above-mentioned parameters are written on the program for the microcomputer, thus causing inconvenience when the parameters are to be changed. More specifically, change in parameters requires a rewriting operation of the program itself and changing operation of the parameters becomes complicated, thus causing occurrence of bugs in the program. Especially, it is very difficult to change the parameters after shipment of the products.

An object of the present invention is therefore to provide an image signal processing apparatus, which permits to change easily parameters required for the image signal processing.

In order to attain the aforementioned object, the image signal processing apparatus of the first aspect of the present invention comprises: a plurality of signal processing circuits for carrying out an image signal processing in accordance with image setting parameters; a storage device for rewritably storing the image setting parameters relative to the plurality of signal processing circuits; and a control device for controlling image adjustment through the plurality of signal processing circuits, utilizing the image setting parameters stored in the storage device.

According to the image signal processing apparatus of the first aspect of the present invention, the storage device rewritably store the image setting parameters so that access to the storage device makes it possible to change easily the image quality setting parameters.

In the second aspect of the present invention, the storage device may store the image setting parameters, which correspond to a plurality of signal formats, respectively; and the control device may select prescribed image setting parameters of the image setting parameters stored in the storage device in accordance with the plurality of signal formats, to control the image adjustment through the signal processing circuits.

According to the second aspect of the present invention, it is possible to execute the image signal processing in the signal processing circuits, utilizing the appropriate image setting parameters corresponding to the plurality of signal formats. There may be further provided a detection device for detecting the signal format of the image signal as inputted so as to select the image setting parameters in accordance with detection results obtained by the detection device.

In the third aspect of the present invention, the image setting parameters may include parameters for setting an output level of a luminance signal. In the fourth aspect of the present invention, the image setting parameters may include parameters for setting an output level of a color-difference signal. In the fifth aspect of the present invention, the image setting parameters may include parameters for setting output levels of output signals for colors of red, green and blue. In the sixth aspect of the present invention, the image setting parameters may include parameters for setting white balance.

In the seventh aspect of the present invention, the signal processing circuits may adjust image quality of a plasma display panel. In such a case, it is possible to change easily the plurality of image setting parameters, which are required for image adjustment of the plasma display panel. The image setting parameters can also be changed in correspondence to change in characteristics of the plasma display panel.

In the Drawings;
FIG. 1 is a block diagram illustrating an image signal processing apparatus of an embodiment of the present invention; and
FIG. 2 is a view exemplifying an address for E²PROM in which various parameters are stored.

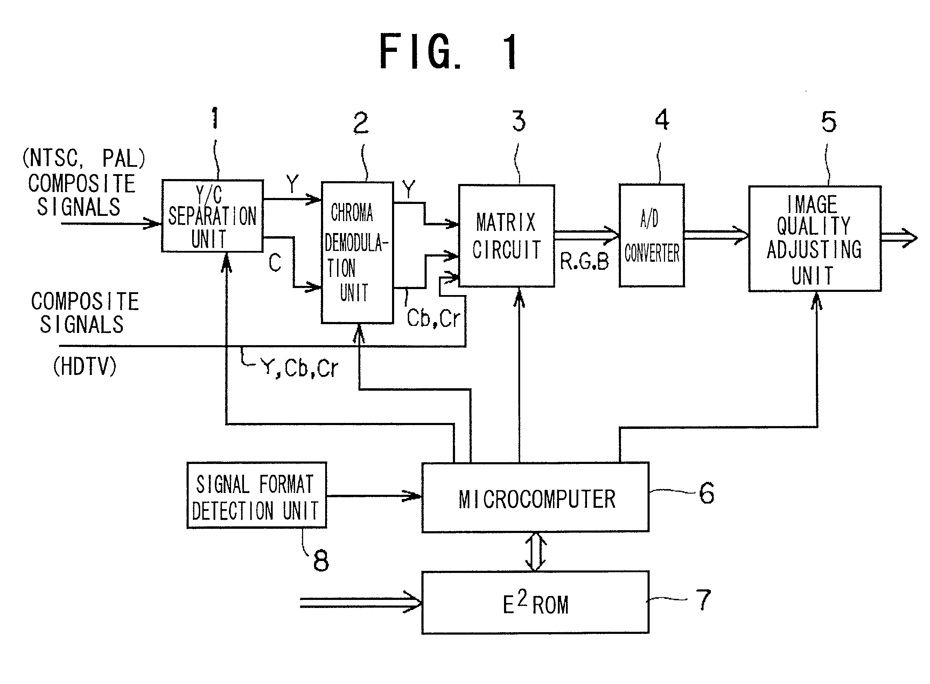

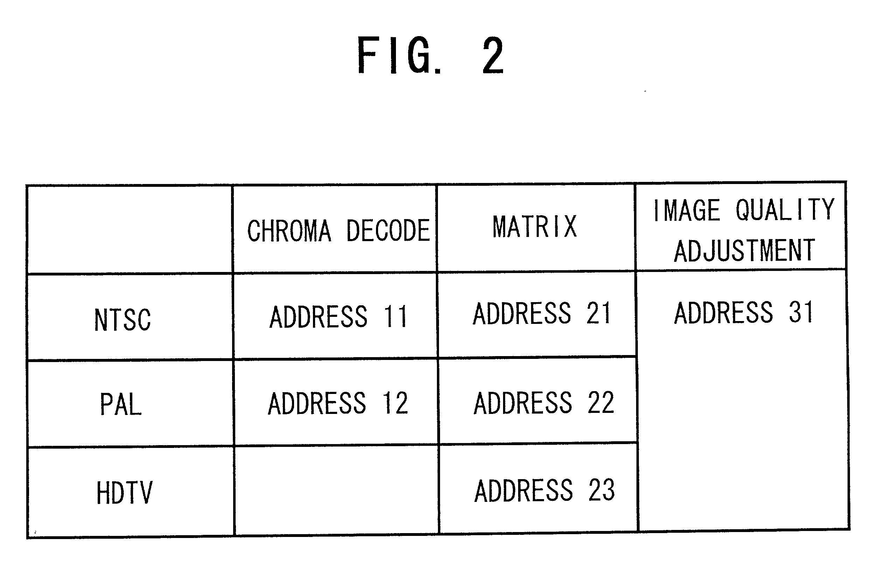

Now, an embodiment of an image signal processing apparatus of the present invention will be described in detail below with reference to FIGS. 1 and 2. The image signal processing apparatus of the embodiment of the present invention is applied to a display device utilizing a plasma display panel. FIG. 1 is a block diagram illustrating an image signal processing apparatus of an embodiment of the present invention and FIG. 2 is a view exemplifying an address for E²PROM in which various parameters are stored.

As shown in FIG. 1, the image signal processing apparatus 100 of the embodiment of the present invention comprises an Y/C separation unit 1 for separating luminance signals (Y) and color signals (C) from composite signals; a chroma demodulation unit 2 for generating color difference signals (Cb, Cr); a matrix circuit 3 for generating RGB signals based on the luminance signals (Y) and the color difference signals (Cb, Cr); an A/D converter 4 for converting the RGB signals (analog signal) as outputted from the matrix circuit 3 into a digital image data; an image quality adjusting unit 5 for processing the digital image data as outputted from the A/D converter 4 to make image quality adjustment; a microcomputer 6 for controlling the respective units of the image signal processing apparatus 100; an E²PROM 7 for storing parameters for the image processing and a signal format detection unit 8 for detecting a signal format of the image signal, which is inputted into the image signal processing apparatus 100.

The image signal processing in each of the chroma demodulation unit 2, the matrix circuit 3 and the image quality adjusting unit 5 is executed in accordance with the parameters. More specifically, the output level of the luminance signal (Y) and the output levels of color difference signals (Cb, Cr) in the chroma demodulation unit 2, the R, G and B output levels in the matrix circuit 3 and the white balance in the image quality adjusting unit 5 are set in accordance with the parameters.

These parameters are set in correspondence to a plurality of signal formats as imputed, i.e., NTSC, PAL and HDTV, respectively, and stored in the prescribed addresses in the E²PROM 7.

For example, the parameters (e.g., adjustment parameters of the output levels of the luminance signal (Y) and the color-difference signals (Cb, Cr)) for the NTSC used in chroma decoding in the chroma demodulation unit 2 are stored in the address 11, and the similar parameters for the PAL used in chroma decoding in the chroma demodulation unit 2 are stored in the address 12, as shown in FIG. 2.

For example, the parameters (e.g., adjustment parameters of the R, G and B output levels) for the NTSC used in the signal processing in the matrix circuit 3 are stored in the address 21, the similar parameters for the PAL used in the signal processing in the matrix circuit 3 are stored in the address 22 and the similar parameters for the HDTV used in the signal processing in the matrix circuit 3 are stored in the address 23.

For example, the parameters (e.g., adjustment parameters of the white balance) used in the signal processing in the image quality adjusting unit 5 are stored in the address 31. The parameters for the image quality adjusting unit 5 are invariant irrespective of the signal formats.

Now, description will be given below of operation of the image signal processing apparatus 100 of the embodiment of the present invention.

When the image signals are imputed into the image signal processing apparatus 100, detection is made of the signal formats of the image signals in the signal format detection unit 8. The detection results are outputted to the microcomputer 6. The microcomputer 6 reads out the parameters corresponding to the signal format from the E²PROM 7. When the signal format is for example of the NTSC, the parameters stored in the addresses 11, 21 and 31 are read out. The parameters read out from the address 11 are sent to the Y/C separation unit 1, the parameters read out from the address 21 to the chroma demodulation unit 2 and the parameters read out from the address 31 to the image quality adjusting unit 5. When the signal format is of the other type of format, the prescribed parameters are read out from the prescribed address of the E²PROM 7.

The composite signal inputted into the Y/C separation unit 1 is separated therein into the luminance signal (Y) and the color signal (C) and these signals are inputted into the chroma demodulation unit 2. The chroma demodulation unit 2 demodulates the color-difference signal in accordance with the parameters, which have been sent from the microcomputer 6. The matrix circuit 3 generates the RGB signal in accordance with the parameters, which have been sent from the microcomputer 6.

The RGB signal is converted into the digital image data by means of the A/D converter 4. The image quality adjusting unit 5 carries out image quality adjustment in accordance with the parameters, which have been sent from the microcomputer 6.

The image signals as outputted from the image quality adjusting unit 5 are inputted through prescribed driving circuits into the plasma display panel so that a certain image is displayed on the plasma display panel.

As is clear from the foregoing, in the image signal processing apparatus 100 of the embodiment of the present invention, the parameters used in the image signal processing in the chroma demodulation unit 2, the matrix circuit 3 and the image quality adjusting unit 5 are stored in the E²PROM 7 serving as a writable recording medium. Access to the E²PROM 7 suffices in order to change the parameters, without carrying out any process for the program, which specifies procedure of the microcomputer 6. Accordingly, such an image signal processing apparatus 100 can easily cope with change in parameters. When the type of IC to be used for signal processing is changed, or the parameters are to be changed due to engineering change, for example, it is possible to change rapidly and easily the parameters. In addition, serviceability after shipment of the products can be improved. Characteristics of the plasma display vary after a lapse of time of use. Even when the parameters of the signal processing are to be changed in accordance with change in such characteristics, it is possible to change easily the parameters.

According to the image signal processing apparatus of the present invention as described in detail, the storage device rewritably store the image setting parameters. As a result, access to the storage device makes it possible to change easily the image quality setting parameters.

## Claims

1. An image signal processing apparatus comprising:
a plurality of signal processing circuits (2, 3, 5) for carrying out an image signal processing in accordance with image setting parameters;
a storage device (7) for rewritably storing the image setting parameters relative to the plurality of signal processing circuits (2, 3, 5); and
a control device (6) for controlling image adjustment through the plurality of signal processing circuits (2, 3, 5), utilizing the image setting parameters stored in the storage device (7).

2. The apparatus as claimed in Claim 1, wherein:
the storage device (7) stores the image setting parameters, which correspond to a plurality of signal formats, respectively; and
the control device (6) selects prescribed image setting parameters of the image setting parameters stored in the storage device (7) in accordance with the plurality of signal formats, to control the image adjustment through the signal processing circuits (2, 3, 5).

3. The apparatus as claimed in Claim 1 or 2, wherein:
the image setting parameters include parameters for setting an output level of a luminance signal.

4. The apparatus as claimed in Claim 1 or 2, wherein:
the image setting parameters include parameters for setting an output level of a color-difference signal.

5. The apparatus as claimed in Claim 1 or 2, wherein:
the image setting parameters include parameters for setting output levels of output signals for colors of red, green and blue.

6. The apparatus as claimed in Claim 1 or 2, wherein:
the image setting parameters include parameters for setting white balance.

7. The apparatus as claimed in any one of Claims 1 to 6, wherein:
the signal processing circuits (2, 3, 5) adjust image quality of a plasma display panel.
